# EUROPÄISCHE PATENTSCHRIFT

(11) **EP 0 536 562 B1**
(45) Veröffentlichungstag und Bekanntmachung des Hinweises auf die Patenterteilung: **08.05.1996**
(21) Anmeldenummer: 92115695.6
(22) Anmeldetag: 14.09.1992
(51) Int. Cl.: C08F 214/18, C08F 2/16, C08L 27/12

(54) **Verkappte Phenolgruppen enthaltende Fluorpolymere, das Verfahren zu ihrer Herstellung und diese enthaltende vernetzbare Zusammensetzungen**
Fluoro-polymers containing blocked phenols, process for their preparation and curable compositions containing them
Polymères fluorés comprenant des phénols bloqués, leurs procédés de préparation et compositions réticulables les contenant

(30) Priorität: 26.09.1991 DE 4132081
(43) Veröffentlichungstag der Anmeldung: 14.04.1993
(73) Patentinhaber: BAYER AG, D-51368 Leverkusen (DE)
(72) Erfinder: Krüger, Ralf, Dr., W-5060 Bergisch Gladbach (DE); Lütjens, Holger, Dr., W-5000 Köln 80 (DE); Piejko, Karl-Erwin, Dr., W-5060 Bergisch Gladbach 2 (DE)

(56) Entgegenhaltungen:
- FR-A- 2 026 271
- FR-A- 2 323 711
- US-A- 3 451 978

## Beschreibung

Die vorliegende Erfindung betrifft Fluorcopolymere mit verkappten Phenolgruppen, daraus hergestellte vernetzte Formkörper und ein Verfahren zur Herstellung dieser Copolymerisate sowie der daraus hergestellten vernetzten Formkörper.

Fluorpolymere werden in der Technik immer dann eingesetzt, wenn besondere Eigenschaften wie niedrige Oberflächenspannung, hohe Chemikalienbeständigkeit oder extreme Anforderungen an die Alterungsstabilität verlangt werden. Für viele Einsatzzwecke werden die Fluorpolymere während oder nach der Formgebung vernetzt, wie z.B. bei einer Verwendung auf dem Kautschukgebiet. Diese Vernetzungsreaktionen benötigen im Falle unmodifizierter, d.h. keine besonderen Reaktivstellen enthaltenden Fluorelastomere, drastische Bedingungen, wodurch die Vernetzung schwierig steuerbar wird und Schädigungen des Fluorpolymers auftreten können, wie eine starke Dehydrofluorierung bei der Vernetzung in Gegenwart von Bisnucleophilen (Bisphenole, Bisamine), siehe z.B. Schmiegel, W.W.: Angew. Makromolek. Chem. 76/77 (1979) 39-65. Die starke Dehydrofluorierung führt, wie aus US 4 032 699 ersichtlich, zu einer erhöhten Basen- und Oxidationsempfindlichkeit und tritt selbst dann auf, wenn nachträglich Vernetzungsstellen durch die Umsetzung eines aus Vinylidenfluorid-hexafluorpropen und Chlortrifluorethylen entstandenen Copolymers mit konventionellen Aminen oder Phenonen eingebracht werden. Um dies zu vermeiden, führt man Reaktivstellen in die Polymerketten ein, sogenannte Cure-sites, an denen selektiv und unter milderen Bedingungen vernetzt werden kann. Solche Cure-sites sind beispielsweise Brom- oder Iodsubstituenten, die in das Fluorpolymer eingeführt werden, indem man entweder Brom- und/oder iod-haltige Vinylverbindungen in kleinen Mengen mit den Fluormonomeren copolymerisiert, siehe z.B.: US 3 351 619, US 4 035 565, US 4 214 060, DE 3 715 210, oder indem man in Gegenwart von gesättigten Brom und Iod enthaltenden Verbindungen polymerisiert, z.B. DE 2 815 187,

DE 3 710 818. Solche durch Brom und/oder Iod modifizierten Fluorpolymere können in Gegenwart eines Covernetzers radikalisch, z.B. durch Peroxid, vernetzt werden.

Solche peroxidisch vernetzten Fluorkautschuke zeigen im Vergleich zu beispielsweise mit Bisphenolen vernetzten und keine besonderen Reaktivstellen enthaltenden Fluorpolymere eine wesentlich verbesserte Resistenz gegenüber Basen, Nucleophilen und oxidativen Angriff, siehe z.B. Streit, G.; Dunse, S.: Kautschuk + Gummi, Kunstst. 38 (1985) 471.

Die Brom- oder Iod-haltigen Fluorpolymere besitzen jedoch den Nachteil, daß sie ausschließlich auf radikalischem Wege vernetzbar oder weiter chemisch modifizierbar sind.

Es besteht daher ein Bedarf an Fluorpolymeren, welche Reaktivgruppen besitzen, die weitere chemische Umsetzungen erlauben und/oder unter milden Reaktionsbedingungen Vernetzungen ermöglichen.

Diese Forderung ließe sich grundsätzlich erfüllen durch den Einbau von mit Fluormonomeren copolymerisierbaren Monomeren, die funktionelle Gruppen enthalten. Wie dem Fachmann aber bekannt ist, copolymerisieren Reaktivgruppen enthaltende Monomere in der Regel äußerst schlecht mit Fluormonomeren.

Es wurde nun gefunden, daß sich fluorhaltige Vinylverbindungen der unten genannten Art und verkappte Phenole mit einer olefinisch ungesättigten Gruppe der weiter unten genannten Art copolymerisieren lassen und im Anschluß an die Abspaltung der Verkappungsgruppe in Gegenwart eines Katalysatorsystems schonend vernetzt oder mit geeigneten bifunktionellen Verbindungen in Polykondensations- oder Polyadditionsreaktionen weiter umgesetzt werden können. Die verkappten Phenole mit einer olefinisch ungesättigten Gruppe sind z.B. substituierte Styrol-Derivate.

Gegenstand der vorliegenden sind Copolymerisate mit verkappten Phenolgruppen aus polymeren Einheiten von
a) 45 bis 99,9 Mol-%, bezogen auf die Molzahlen aller Comonomere, eines oder mehrerer Ethylene mit 1 bis 4 Fluoratomen,
b) 0 bis 54,9 Mol-%, bezogen auf die Molzahlen aller Comonomere , eines oder mehrerer Comonomere aus der Gruppe von
   b1) geradkettigen oder verzweigten C₃-C₈-Alkenen mit mindestens einem Fluoratom,
   b2) Alkyl-vinylethern mit mindestens einem Fluoratom,
   b3) offenkettigen oder cyclischen C₃-C₆-Ketonen mit fluorierten α,α'-Stellungen und
   b4) nicht fluorierten C₂-C₄-Alkenen, C₃-C₆-Alkylyinylethern und C₄-C₆-Vinylestern und
c) 0,1-5 Mol-%, bezogen auf die Molzahlen aller Comonomere, eines oder mehrerer Comonomere aus der Gruppe der verkappten Phenole mit einer olefinisch ungesättigten Gruppe gemäß Formel (I): 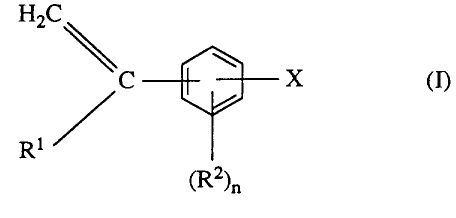 worin
   - R¹=: H, C₁-C₄-Alkyl,
   - R=: H, Cl, Br, F, C₁-C₄-Alkyl, C₆-C₁₂-Cycloalkyl, C₁-C₄-Alkoxy, mit n = 0, 1, 2,
   - X=: 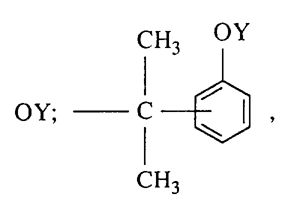 wobei Y eine unter den Polymerisationsbedingungen stabile Schutzgruppe zur Verkappung der Phenolfunktion bedeutet und im nachhinein durch Thermolyse, Solvolyse o.a. abgespalten werden kann, wobei
   Y die Bedeutung von Si(R³)₃, 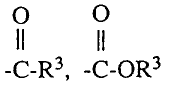 hat und
   R³ = C₁-C₄-Alkyl, C₆-C₁₂-Cycloalkyl oder ein einwertiger aromatischer Kohlenwasserstoffrest mit 6-9 Kohlenstoffatomen ist.

Als Komponente c) bevorzugt sind Comonomere der Formel (I)
mit R¹ = C₁-C₄-Alkyl und X = OY,
worin Y= 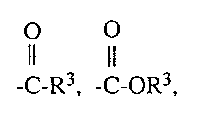 beispielsweise

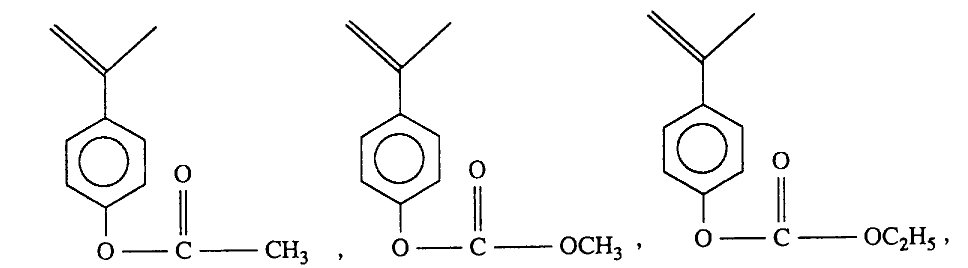

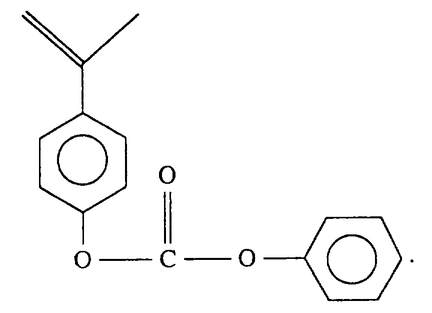

Die Erfindung betrifft weiterhin ein Verfahren zur Herstellung von Copolymerisaten der oben beschriebenen Art, das dadurch gekennzeichnet ist, daß man die obengenannten Comonomeren radikalisch in Lösung, Suspension oder Emulsion bei -15°C bis 100°C, bevorzugt bei 0 bis 70°C bei erhöhtem Druck polymerisiert.

Sie besitzen mittlere Molmassen von 10³ bis 10⁷ g/mol, bevorzugt von 10³ bis 2·10⁶ g/mol.

Als Bestandteil a) der erfindungsgemäßen Copolymerisate kommen Ethylene in Frage, die 1 bis 4 Fluoratome tragen. Die nicht durch Fluor besetzten Bindungen der beiden Kohlenstoffatome können Wasserstoff oder Chlor oder beides tragen. Solche fluorierten Ethylene sind beispielsweise: Vinylidenfluorid, Tetrafluorethylen, Chlortrifluorethylen und Vinylfluorid. Solche fluorierten Ethylene können sowohl einzeln als auch als Gemisch mehrerer von ihnen eingesetzt werden. In bevorzugter Weise werden als Bestandteile a) die oben beispielhaft genannten fluorierten Ethylene eingesetzt.

Als Bestandteil b) kommen eines oder mehrere Comonomere aus der Gruppe von b1), b2), b3) und b4) in Frage. Bestandteile der Gruppe b1) sind geradkettige oder verzweigte C₃-C₈-Alkene, die mindestens ein Fluoratom enthalten. Beispiele für Stoffe der Gruppe b1) sind: Hexafluorpropen, 2-Hydro-pentafluorpropen, 3,3,3-Trifluorpropen, ein- oder mehrfach fluorierte Butene, wie Hexafluorisobuten, Pentene, Hexene oder Octene. Solche Stoffe können neben mindestens einem Fluoratom auch Chloratome tragen. In bevorzugter Weise handelt es sich bei Stoffen der Gruppe b1) um C₃-C₆-Alkene mit mindestens einem Fluoratom, in besonders bevorzugter Weise um C₃-C₄-Alkene mit mindestens einem Fluoratom.

Stoffe der Grupe b2) sind Alkyl-vinylether mit mindestens einem Fluoratom, beispielsweise Perfluorpropyl-perfluorvinylether, Perfluormethyl-perfluorvinylether, Perfluorpropyl-vinylether, n-Butyl-perfluorvinylether.

Stoffe der Gruppe b3) sind offenkettige oder cyclische C₃-C₆-Ketone mit fluorierten α,α'-Stellungen, die über die C=O-Bindung copolymerisiert werden, wie Hexafluoraceton und Perfluorcyclopentanon.

Stoffe der Gruppe b4) sind nicht fluorierte C₂-C₄-Alkene, wie Ethylen, Propen, 1-Buten, Isobutylen, C₃-C₆-Alkyl-vinylether, wie Methyl-vinylether, Ethyl-vinylether und ähnliche und C₄-C₆-Vinylester, wie Vinylacetat, Vinylpropionat und andere.

Als Bestandteil c) werden verkappte Phenole mit einer olefinisch ungesättigten Gruppe der Formel (I) oder Gemische mehrerer von ihnen eingesetzt. Solche Verbindungen enthalten als obligatorische Bestandteile in α-Stellung zur Vinyleinheit eine C₁-C₄-Alkyl-Gruppe, wobei die Methylgruppe bevorzugt wird, und eine verkappte Phenolgruppe. Die Verkappung der Phenolgruppe erfolgt nach bekannten Verfahren durch Überführung in ihre Trialkylsilylether (beispielsweise durch Umsetzung mit Trialkylchlorsilanen) oder Phenolester (beispielsweise durch Umsetzung mit Carbonsäurechloriden bzw. Carbonsäureanhydriden oder Chlorameisensäurealkylester, z.B. Chlorkohlensäuremethylester). In bevorzugter Weise werden als Bestandteil c) solche Verbindungen eingesetzt, in denen R¹ = Methyl, R = Wasserstoff und Y = Acetyl, Methoxycarbonyl, Ethoxycarbonyl oder Phenoxycarbonyl bedeuten. In weiterhin bevorzugter Weise befinden sich die olefinisch ungesättigte Gruppe und die verkappte Phenolfunktion in p-Stellung zueinander am Aromaten.

In einem bevorzugten Fall enthalten die erfindungsgemäßen Copolymerisate als Bestandteil a) eines oder mehrere Comonomere aus der Gruppe Vinylidenfluorid, Tetrafluorethylen, Chlor-trifluorethylen und Vinylfluorid und fluorhaltige C₃-C₈-Alkene können Comonomere des Bestandteils b1) sein sowie fluorhaltige Alkyl-vinylether als Bestandteil b2).

Die Bestandteile a), b) und c) kommen grundsätzlich in den weiter oben genannten Mengen vor. Die Bestandteile a) und c) sind obligatorische Bestandteile der erfindungsgemäßen Comonomere. Ihre Anteile ergänzen sich zu 100 Mol-%.Jedoch kann ein Teil des Bestandteils a) durch einen oder mehrere Verbindungen des Bestandteils b) ersetzt sein. Hierbei sind die Untergruppen von b) nämlich b1), b2), b3) und b4), grundsätzlich gleichberechtigt und können in Form einer Verbindung oder in Form eines Gemisches mehrerer Verbindungen aus diesen Untergruppen vertreten sein.

Die Menge des Bestandteils c) beträgt 0,1 bis 5 Mol-%, bevorzugt 0,2 bis 2,5 Mol-%, besonders bevorzugt 0,3 bis 1,5 Mol-%. Die Menge des Bestandteils a) oder der Summe der Bestandteile a) und b) unter Einsatz der Untergruppen b1), b2), b3) und/oder b4) beträgt entsprechend 95 bis 99,9 Mol-%, bevorzugt 97,5 bis 99,8 Mol-%, besonders bevorzugt 98,5 bis 99,7 Mol-%. Innerhalb dieser zuletzt angegebenen Mengen beträgt die Menge des Bestandteils a) mindestens 45 Mol-%, bevorzugt mindestens 48 Mol-%, besonders bevorzugt mindestens 50 Mol-%, wobei hier wie auch bei anderen Angaben zu den erfindungsgemäßen Copolymeren immer auf die gesamte Molzahl aller Comonomere Bezug genommen wird. Die Comonomere der Gruppe b) haben einen Anteil von 0 bis 54,9 Mol-%, bevorzugt bis 51,9 Mol-%, besonders bevorzugt bis 49,9 Mol-%, wobei die nicht fluorhaltigen ungesättigten Verbindungen der Untergruppe b4) in bevorzugter Weise bis zu einem maximalen Gehalt von 25 Mol-% eingesetzt werden. Die Untergrenze 0 Mol-% deutet an, daß die Comonomere des Bestandteils b) fakultative Comonomere der erfindungsgemäßen Copolymerisate sind und gegebenenfalls völlig fortgelassen werden. Es hat sich jedoch als vorteilhaft erweisen, daß beim Einsatz der erfindungsgemäßen Copolymerisate als Kautschuke stets Anteile des Bestandteils b) in den Copolymerisaten vorhanden sind. In einer bevorzugten Ausführungsform enthalten die erfindungsgemäßen Copolymerisate einen Anteil von 5 bis 45 Mol-%, bevorzugt 10 bis 40 Mol-%, bezogen auf die Molzahl aller Comonomere, Comonomere des Bestandteils b), bevorzugt der Bestandteile b1), b2) und/oder b4).

In einer bevorzugten Ausführungsform der vorliegenden Erfindung wird als Copolymerisat eine Kombination zweier oder mehrerer Monomere aus der Gruppe Vinylidenfluorid/Hexafluorpropen, Vinylidenfluorid/Tetrafluorethylen/Hexafluorpropen, Tetrafluorethylen/Vinylidenfluorid/Perfluoralkyl-/Perfluorvinylether, Tetrafluorethylen/Propen, Tetrafluorethylen/Vinylidenfluorid/Hexafluorpropen/Pentafluorpropen, Tetrafluorethylen/Vinylidenfluorid/Hexafluorpropen/Perfluoralkyl-/Perfluorvinylether, Tetrafluorethylen/Hexafluorpropen/Hexafluorisobutylen und Vinylidenfluorid/Chlortrifluorethylen/Hexafluorpropen eingesetzt.

Neben den soeben beschriebenen Copolymerisaten, in denen Comonomere der Gruppe b) im Unterschuß gegenüber denen der Gruppe a) vorliegen, sind solche Copolymerisate von Bedeutung, in denen die Comonomere der Gruppen a) und b) annähernd in gleicher molarer Menge vorliegen.

Die Polymerisation kann hierbei so gelenkt werden, daß der größte Teil der Polymerkette streng alternierend Monomere a) und b) enthält, zu denen - entsprechend ihrer Gesamtmenge - in größeren Abständen verkappte Phenole der Gruppe c) treten.

Die erfindungsgemäßen Copolymerisate enthalten vorzugsweise 45 bis 55 Mol-% aus Gruppe a), 44,9 bis 54,9 Mol-% aus Gruppe b) und 0,1 bis 5 Mol-% aus Gruppe c), bevorzugt 47,9 bis 51,9 Mol-% aus Gruppe a), 47,9 bis 51,9 Mol-% aus Gruppe b) und 0,2 bis 2,5 Mol-% aus Gruppe c). Ein wichtiges Beispiel für eine Zweierkombination von Comonomeren, die in annähernd gleicher molarer Mengeeinpolymerisiert werden, ist die Kombination Tetrafluorethylen/Propen, wozu dann noch das verkappte Phenol aus Gruppe c) tritt.

Gegenstand der vorliegenden Erfindung ist auch ein Verfahren zur Herstellung der Copolymerisate, wonach die erfindungsgemäß einsetzbaren Comonomere radikalisch in Lösung, Suspension oder Emulsion bei -15°C bis +100°C, bevorzugt bei 0 bis 70°C, besonders bevorzugt bei 20 bis 60°C bei erhöhtem Druck copolymerisiert werden.

Zur Herstellung der erfindungsgemäßen Copolymerisate können die für die Copolymerisation fluorhaltiger Monomere bekannten Verfahrensparameter herangezogen werden; es kan in Lösung, Suspension oder Emulsion copolymerisiert werden (US 2 968 649; US 3 051 677; US 3 053 818; US 3 331 823; US 3 335 106 mit beispielhafter Angabe der in Frage kommenden Reaktionsmedien und allgemeinen Reaktionsbedingungen). Zur Initiierung der radikalischen Copolymerisation werden grundsätzlich bekannte und für das jeweilige Reaktionsmedium geeignete Verbindungen eingesetzt. So verwendet man bei der Lösungs- und Suspensionspolymerisation organische, öllösliche Peroxide, die auch fluoriert sein können, wie Benzoylperoxid, Trifluoracetylperoxid oder organische lösliche Azoverbindungen, wie Azobisisobutyronitril. Bei der Emulsionspolymerisation, die für die Herstellung der erfindungsgemäßen Copolymere bevorzugt wird, werden wasserlösliche anorganische Perverbindungen als Initiatoren benutzt, wie Persulfate, Perborate, Percarbonate etc., im allgemeinen in Form ihrer Natrium- oder Ammoniumsalze.

In Abhängigkeit von der Polymerisationstemperatur und von der Zerfallskonstante des Initiators müssen bei Anwendung niederer Temperaturen zur Polymerisation Zerfallsbeschleuniger, in der Regel Reduktionsmittel, zusätzlich eingesetzt werden. Als solche können dienen: Schwefelverbindungen, wie etwa Natriumsulfit, Natriumpyrosulfit oder Rongalit C (Natriumformamidinsulfinsäure), weiterhin organische Reduktionsmittel, wie Ascorbinsäure, Triethanolamin, Metallsalze, wie Eisen(II)-oder Kobalt(II)-Salze, metallorganische Verbindungen etc..

Die Reaktionstemperaturen für die Copolymerisation liegen zwischen -15 und +100°C, bevorzugt bei 0 bis 70°C, besonders bevorzugt bei 20 bis 60°C.

Um das Molekulargewicht der entstehenden Polymeren einzustellen, können Kettenübertragungsmittel, wie Methanol, Isopropanol, Isopentan, Ethylacetat, Diethylmalonat und Tetrachlorkohlenstoff erforderlichenfalls eingesetzt werden.

Es ist ein weiteres Kennzeichen des erfindungsgemäßen Verfahrens, daß die Copolymerisation unter einem erhöhtem Druck durchgeführt wird. Dieser Druck soll mindestens 5 bar betragen, braucht aber den Wert von 100 bar nicht zu überschreiten.

Ein für das erfindungsgemäße Verfahren bevorzugter Bereich ist 5 bis 65 bar.

Die Herstellung der erfindungsgemäßen Copolymerisate kann absatzweise, bevorzugt aber nach halbkontinuierlichen oder kontinuierlichen Verfahren erfolgen.

In einer vorteilhaften Variante des erfindungsgemäßen Verfahrens wird die Copolymerisation in Emulsion durchgeführt. Zur Stabilisierung der Dispersion können fluorierte Emulgatoren eingesetzt werden. Bevorzugt gelangen perfluorierte Emulgatoren (z.B. wasserlösliche Salze der C₆-C₁₂-Perfluorcarbonsäure oder -sulfonsäure) zum Einsatz. Beispielhaft seien hier die Natrium- oder Ammoniumsalze der Perfluoroctansäure und das Lithiumsalz der Perfluoroctansulfonsäure genannt. Die einzusetzenden Mengen richten sich nach der kritischen Micellkonzentration des benutzten Emulgators im jeweiligen System. So liegt beispielsweise die einzusetzende Menge an Lithiumperfluoroctansulfonat zwischen 0,3 und 1 Gew.-%, bezogen auf die wäßrige Phase, wogegen vom Natrium- oder Ammoniumperfluoroctanoat Konzentrationen zwischen 1 und 2 Gew.-% erforderlich sind.

In den erfindungsgemäßen Verfahren übersteigt der pH-Wert der Emulsion vorzugsweise den Wert von 8 nicht und liegt besonders bevorzugt im pH-Bereich zwischen 4 und 7,5.

Die Monomere a) bis c) werden bei kontinuierlichen und halbkontinuierlichen Verfahrensweisen entsprechend ihrer Verbrauche kontinuierlich nachdosiert. Der Bestandteil c) kann dabei in Form der reinen Verbindung oder als Bestandteil einer wäßrigen Dispersion aber auch als Lösung in solchen Lösungsmitteln, die die radikalische Copolymerisation nicht stören, dem Polymerisationssystem zugeführt werden. Solche Lösungsmittel sind beispielsweise t-Butanol und Methylacetat.

Gegenstand der vorliegenden Erfindung sind ebenfalls vernetzbare Zusammensetzungen aus den erfindungsgemäßen Copolymerisaten und einem geeigneten Katalysatorsystem. Der Katalysatorsystem besteht vorzugsweise
1. aus einem als "Cobeschleuniger" oder Säureakzeptor dienenden Metalloxid oder -hydroxid von zweiwertigen Metallen, wie Magnesium, Calcium, Blei, Zink und Barium oder einem basischen Salz mit einem organischen Säurerest wie Natriumstearat, Magnesiumoxalat bzw. Kombinationen mehrerer von ihnen in Anteilen von 2 bis 25 Gew.-Teilen, bezogen auf 100 Teile Polymer
und
2. einer organischen Oniumverbindung (Ammonium-, Arsonium-, Stibonium-, Phosphonium-, Aminophosphonium-, Phosphoran-, Iminium- und Sulfoniumverbindungen), z.B. Benzyl-triphenylphosphoniumchlorid in Anteilen vin 0,1 bis 3 Gew.-Teilen, bezogen auf 100 Teile Polymer. Solche Oniumverbindungen sind prinzipiell bekannt und werden als Härtungsbeschleuniger bei Fluorkautschuken in Kombination mit aromatischen Polyhydroxyverbindungen oder Polyaminen eingesetzt (vgl. z.B. EP-A-404 411 (Grootaert et al.) und darin zitierte Lit..

Zur Herstellung der härtbaren Zusammensetzung, die gegebenenfalls weitere Füllstoffe enthält, nutzt man herkömmliche Methoden der Mischungsbildung. So können die erfindungsgemäßen Fluorpolymere, die Elastomere ergeben, beispielsweise auf der Walze oder im Kneter zu Mischungen verarbeitet werden, die anschließend bei erhöhten Temperaturen in formgebenden Vorrichtungen vulkanisiert werden. Eine Verarbeitung in Lösung oder Schmelze ist ebenso möglich, wobei nach der Formgebung bei erhöhten Temperaturen die Trocknung und Vernetzung in einem Schritt erfolgen können, wenn man etwa Formkörper in Form von Folien, Filmen, Fasern oder kompakten Formkörpern herstellt. Eine gegebenenfalls mit Lösungsmittel hergestellte flüssige Zusammensetzung eignet sich in hervorragender Weise für die Anwendung in Beschichtungen oder Klebeschichten.

Die Härtung der Zusammensetzung nach abgeschlossener Formgebung wird bei erhöhten Temperaturen durchgeführt, wobei dies stufenweise bis zum gewünschten Härtungsgrad geschehen kann. Bei der Herstellung von kompakten Formkörpern kann das Produkt beispielsweise nach einer Anfangshärtung in einer dem Erhalt der Dimensionsstabilität dienenden Form einer Nachhärtung unterzogen werden. Die dabei notwendige Temperatur ist abhängig von der zur Verfügung stehenden Zeit und sollte mehr als 100°C betragen. Bevorzugt wird die Härtung bei Temperaturen von 120°C und höher durchgeführt. Der Fachmann weiß, daß die optimale Härtungszeit und -temperatur jeweils von solchen Faktoren wie Art und Mengen der Ingredentien und den gewünschten Eigenschaften des Produktes abhängen.

Die erfindungsgemäßen Fluorpolymere sind wegen ihrer phenolischen Reaktivgruppen, die nach Abspaltung der Verkappungsgruppe entstehen, weiteren chemischen Umsetzungen zugänglich. Weiterhin weisen die erfindungsgemäßen Fluorpolymere gute Verarbeitungseigenschaften wie Vermischbarkeit mit Füllstoffen, Vernetzungshilfsmitteln, Pigmenten etc. auf, so daß Mischungen oder Blends hoher Homogenität erzeugt werden können, die anschließend schnell und unter schonenden Bedingungen zu thermostabilen Vulkanisaten oder gehärteten Formkörpern vernetzt werden oder als härtbare Klebematerialien zur Nutzung gelangen können. Der Vemetzungsgrad und damit die physikochemischen Eigenschaften des Materials lassen sich in weiten Grenzen gezielt variieren.

### Beispiele

### Beispiel 1

In einem 6 l-Autoklaven wurden 2500 ml entionisiertes Wasser vorgelegt. Darin wurden 9 g Lithiumperfluoroctansulfonat und 15 g Kaliumperoxiddisulfat gelöst. Diese Lösung zeigt einen pH-Wert von 8,5, wobei er innerhalb kurzer Zeit nach dem Erreichen der Polymerisationstemperatur auf Werte unter 7,5 absank. Dann wurde der geschlossene Autoklav dreimal jeweils mit einem Stickstoffdruck von 10 bar beaufschlagt und anschließend auf Normaldruck entspannt. In den Autoklaven wurden 280 g Hexafluorpropen und 200 g Vinylidenfluorid gegeben und das Reaktionsgemisch unter Rühren auf 55°C erwärmt. Nach Erreichen dieser Temperatur betrug der Autoklaveninnendruck 24 bar. Die Polymerisation wurde eingeleitet durch die kontinuierliche Zugabe von 10 ml pro Stunde einer wäßrigen Lösung, die 2 g Triethanolamin enthielt. Während der Polymerisation wurde ein Monomergemisch aus 60 Gew.-Teilen Vinylidenfluorid und 40 Gew.-Teilen Hexafluorpropen so nachgedrückt, daß der Autoklaveninnendruck konstant auf 24 bar gehalten wird. Gleichzeitig mit dem Fluormonomeren wurden auf je 100 Gew.-Teile Fluormonomere 2,6 Gew.-Teile p-Isopropenylphenylethyl-carbonat in den Autoklaven gedrückt. Innerhalb einer Gesamtreaktionszeit von 10 h wurden auf diese Weise 270 g Vinylidenfluorid, 180 g Hexafluorpropen und 12 g p-Isopropenylphenylethyl-carbonat durch Polymerisation verbraucht. Zur Beendigung der Polymerisation wurde der Autoklaveninhalt abgekühlt und das nicht umgesetzte Gasgemisch abgelüftet. Es wurde eine koagulatfreie wäßrige Emulsion, die einen pH-Wert von 5,4 bei einem Feststoffgehalt von 18 % aufwies, erhalten. Diese Emulsion wurde zum Koagulieren des Produktes mit verdünnter Schwefelsäure auf einen pH-Wert von ca. 2 angesäuert und in 3500 ml einer 4 %igen wäßrigen Magnesiumsulfatlösung gegossen. Das Produkt wurde mit Wasser gewaschen und dann getrocknet, wobei man 550 g eines kautschukartigen Copolymeren erhielt, das Vinylidenfluorid, Hexafluorpropen und p-Isopropenylphenyl-ethylcarbonat enthält. Das Copolymer ist in Lösungsmitteln wie Dimethylformamid, Dimethylacetamid, Aceton, Methylethylketon und Tetrahydrofuran löslich; die Grenzviskosität beträgt 0,9 dl/g (DMF, 25°C). Das molare Verhältnis von Vinylidenfluorid zu Hexafluorpropen im Copolymeren wurde durch ¹⁹F-Kernresonanzspektroskopie bestimmt und beträgt 79:21. Mittels IR-Spektroskopie wurde der Einbau des p-Isopropenylphenyl-ethylcarbonats nachgewiesen. Man beobachtet eine Absorptionsbande bei 1750 cm⁻¹, die der Carbonylgruppe der Phenyl-ethyl-carbonat-Einheit zuzuordnen ist. Nach Umfällung des Copolymeren aus Aceton mit Toluol blieb diese Bande nahezu vollständig erhalten. Der Anteil an p-Isopropenyl-phenyl-ethylcarbonat im Copolymeren wurde zu 0,5-1 Mol-% bestimmt.

### Beispiel 2

Die Copolymerisation von Vinylidenfluorid, Hexafluorpropen und p-Isopropenylphenyl-ethyl-carbonat wurde analog der im Beispiel 1 beschriebenen Verfahrensweise wiederholt mit dem Unterschied, daß zur Aufrechterhaltung des Anfangsdruckes in 100 min 300 g Vinylidenfluorid, 200 g Hexafluorpropen und 7 g p-Isopropylphenyl-ethyl-carbonat im konstanten Verhältnis in den Autoklaven gedrückt wurden. Dabei entstanden 464 g eines kautschukartigen Copolymeren aus Vinylidenfluorid, Hexafluorpropen und p-Isopropenylphenyl-ethyl-carbonat, wobei das molare Verhältnis von Vinylidenfluorid zu Hexafluorpropen 80:20 beträgt und der Anteil an eingebauten p-Isopropylphenyl-ethyl-carbonat-Einheiten ca. 0,4 ± 0,2 Mol-% beträgt. Das Copolymer ist in denselben Lösungsmitteln löslich wie das nach Beispiel 1 hergestellte. Die Grenzviskosität beträgt 1,8 dl/g (DMF, 25°C).

### Beispiel 3

In einem 0,7 l-Autoklaven wurden 300 ml entionisiertes Wasser vorgelegt. Darin wurden 3,9 g Natriumperfluoroctanoat und 1,8 g Kaliumperoxidisulfat gelöst. Diese Lösung zeigt einen pH-Wert von 8,5, wobei er in kurzer Zeit nach dem Erreichen der Polymerisationstemperatur auf Werte unter 7,5 absank. Dann wurde der geschlossene Autoklav dreimal jeweils mit einem Stickstoffdruck von 10 bar beaufschlagt und anschließend auf Normaldruck entspannt. In den Autoklaven wurden 60 g Hexafluorpropen und 60 g Vinylidenfluorid gegeben und das Reaktionsgemisch unter Rühren auf 70°C erwärmt. Nach Erreichen dieser Temperatur wurden innerhalb von 2 h 7,8 g p-Isopropenylphenyl-acetat, die in 12 ml tert.-Butanol gelöst waren, zugepumpt. Nach einer Gesamtreaktionszeit von 3 h, in der der Reaktionsdruck auf 20 bar abnahm, wurde der Autoklaveninhalt abgekühlt und das nicht umgesetzte Gasgemisch abgelüftet. Es wurde eine koagulatfreie wäßrige Emulsion, die einen pH-Wert von 3,4 bei einem Feststoffgehalt von 10,8 % aufwies, erhalten. Durch die analoge Ausführung der im Beispiel 1 beschriebenen Verfahrensweise zur Produktisolierung erhielt man 30 g eines kautschukartigen Copolymeren bestehend aus Einheiten von Vinylidenfluorid, Hexafluorpropen und p-Isopropenylphenyl-acetat. Das Copolymer ist in denselben Lösungsmitteln löslich wie das nach Beispiel 1 hergestellte. Die Grenzviskosität beträgt 0,9 dl/g (DMF, 25°C).

Das molare Verhältnis von Vinylidenfluorid zu Hexafluorpropen im Copolymeren beträgt 81:19. Mittels Protonenresonanz- und IR-Spektroskopie wurde der Einbau des p-Isopropenylphenyl-acetats nachgewiesen. Im IR-Spektrum findet man die Absorptionsbande der Carbonylgruppe der Phenylacetat-Einheit bei 1760 cm⁻¹. Im ¹H-NMR-Spektrum beobachtet man zwischen 6,5 und 8 ppm die Signale der aromatischen (Phenyl-)Protonen und bei 1 bis 1,3 ppm das Quartett für die Protonen der Methylgruppe. Die quantitative Auswertung des Spektrums ließ eine Bestimmung des Anteils an p-Isopropylphenyl-acetat-Einheiten im Copolymer auf 1,5±0,5 Mol-% zu.

### Beispiel 4

In einem 0,7 l-Autoklaven wurden 300 ml entionisiertes Wasser vorgelegt. Darin wurden 1,1 g Lithiumperfluoroctansulfonat und 1,8 g Kaliumperoxidisulfat gelöst. Diese Lösung zeigt einen pH-Wert von 8,5, wobei er in kurzer Zeit nach dem Erreichen der Polymerisationstemperatur auf Werte unter 7,5 absank. Dann wurde der geschlossene Autoklav dreimal mit einem Stickstoffdruck von 10 bar beaufschlagt und anschließend auf Normaldruck entspannt. In den Autoklaven wurden 28 g Chlortrifluorethylen und 46 g Vinylidenfluorid gegeben und das Reaktionsgemisch unter Rühren auf 70°C erwärmt. Nach Erreichen dieser Temperatur wurden innerhalb von 2 h 7,8 g p-Isopropenylphenyl-acetat, die in 12 ml tert.-Butanol gelöst waren, zugepumpt. Nach einer Gesamtreaktionszeit von 8 h, in der der Reaktionsdruck auf 13 bar abnahm, wurde der Autoklaveninhalt abgekühlt und das nicht umgesetzte Gasgemisch abgelüftet. Es wurde eine koagulatfreie wäßrige Emulsion, die einen pH-Wert von 3,4 bei einem Feststoffgehalt von 13 % aufwies, erhalten. Durch die analoge Ausführung der im Beispiel 1 beschriebenen Verfahrensweise zur Produktisolierung erhielt man 41 g eines kautschukartigen Copolymeren bestehend aus Einheiten von Vinylidenfluorid, Chlortrifluorethylen und p-Isopropenylphenyl-acetat. Das Copolymer ist in Dimethylformamid und Aceton löslich. Die Grenzviskosität beträgt 1,2 dl/g (DMF, 25°C).

Anhand der Bestimmung des Fluor- und Chlorgehaltes sowie des ¹H-NMR-Spektrums wurde folgende Copolymerzusammensetzung bestimmt:
Vinyliden-fluorid/Chlortrifluorethylen/p-Isopropenyl-phenyl-acetat: 82/17/ca.1 (Molverhältnis). Die Auswertung des ¹H-NMR-Spektrums läßt nur eine grobe Bestimmung des Gehaltes an p-Isopropenyl-phenyl-acetats zu 1±0,5 Mol-% zu.

### Beispiel 5

5 g des gemäß Beispiel 3 hergestellten Copolymeren wurden in 20 g Dimethylformamid gelöst. Zu dieser Lösung wurden 50 mg Benzyltriphenylphosphoniumchlorid, 300 mg Calciumhydroxid und 150 mg Magnesiumhydroxid gegeben. Die gesamte Mischung wurde zu einem 1 mm starken Film vergossen und 5 h bei 120°C getrocknet. Der so erhaltene elastische Film war in Dimethylformamid nicht mehr lösbar. Eine Gelgehaltsbestimmung nach M. Hoffmann et. al., Polymeranalytik I und II, Georg Thieme Verlag, Stuttgart 1977, in Dimethylformamid bei 25°C ergab 50 Gew.-% unlösliche Gelanteile.

### Vergleichsbeispiel 6

5 g eines Copolymeren aus Vinylidenfluorid und Hexafluorpropen, das man analog der im Beispiel 2 beschriebenen Verfahrensweise unter Wegfall der p-Isopropenylphenyl-acetat-Zugabe herstellte, wurden ebenfalls in 20 g Dimethylformamid gelöst. Zu dieser Lösung wurden neben 50 mg Benzyltriphenylphosphoniumchlorid, 300 mg Calciumhydroxid und 150 mg Magnesiumhydroxid zusätzlich 200 mg Bisphenol AF (2,2-Bis-(4-hydroxyphenyl)-hexafluorpropan) hinzugegeben. Aus dieser Mischung wurde wie oben ein getrockneter Film hergestellt, der sich in Dimethylformamid wieder auflöste. Bei der Gelgehaltsbestimmung wurden nur 6 Gew.-% unlösliche Gelanteile gefunden.

Die in Beispiel 5 und Vergleichsbeispiel 6 aufgeführten Gelgehalte zeigen an, daß ein erfindungsgemäßes, verkappte Phenolgruppen enthaltendes Fluorpolymer unter den angegebenen Bedingungen vernetzt. während ein reines Fluorpolymer in Gegenwart von Biphenol-AF unvernetzt bleibt.

### Beispiel 7

Auf einem Zweiwalzen-Gummimischwalzwerk wurde eine Mischung aus 100 Gew.-Tln. des gemäß in Beispiel 1 erhaltenen Copolymeren mit 6 Gew.-Tln. Calciumhydroxid, 3 Gew.-Tln. Magnesiumoxid, 30 Gew.-Tln. Ruß MT Black N 990 und 0,5 Gew.-Tln. Benzyl-triphenyl-phosphoniumchlorid hergestellt. Diese Mischung wurde 10 min bei 175°C druckvulkanisiert und 24 Stunden bei 200°C im Umluftofen nachvulkanisiert.

Das so hergestellte Vulkanisat (100x100x1 mm-Platten) besitzt folgende Härte und Zug-Dehnungscharakteristik:

| Meßgröße | Beispiel 7 |
|---|---|
| Härte [Shore A] | 58 |
| Reißfestigkeit [N/mm] | 20,5 |
| Reißdehnung [%] | 375 |
| Spannung bei 100% Dehnung [N/mm] | 4,9 |

## Patentansprüche

1. Copolymerisate mit verkappten Phenolgruppen aus polymeren Einheiten von
a) 45 bis 99,9 Mol-%, bezogen auf die Molzahlen aller Comonomere , eines oder mehrerer Ethylene mit 1 bis 4 Fluoratomen,
b) 0 bis 54,9 Mol-%, bezogen auf die Molzahlen aller Comonomerer, eines oder mehrerer Comonomere aus der Gruppe von
b1) geradkettigen oder verzweigten C₃-C₈-Alkenen mit mindestens einem Fluoratom,
b2) Alkyl-vinylethern mit mindestens einem Fluoratom,
b3) offenkettigen oder cyclischen C₃-C₆-Ketonen mit fluorierten α,α'-Stellungen und
b4) nicht fluorierten C₂-C₄-Alkenen, C₃-C₆-Alkylvinylethern und C₄-C₆-Vinylestern und
c) 0,1-5 Mol-%, bezogen auf die Molzahlen aller Comonomere , eines oder mehrerer Comonomere aus der Gruppe der verkappten Phenole mit einer olefinisch ungesättigten Gruppe gemäß Formel (I): 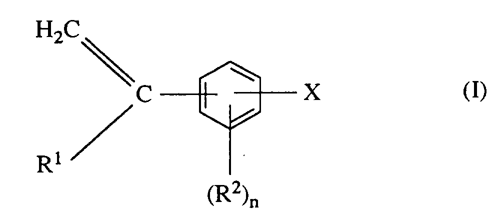 worin
R¹= H, C₁-C₄-Alkyl,
R= H, Cl, Br, C₁-C₄-Alkyl, C₆-C₁₂-Cycloalkyl, C₁-C₄-Alkoxy, mit n = 0, 1, 2,
und
X= 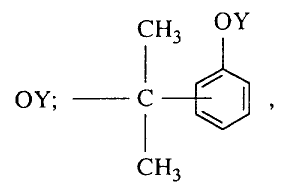
wobei
Y eine unter den Polymerisationsbedingungen stabile Schutzgruppe zur Verkappung der Phenolgruppe bedeutet und im nachhinein durch Thermolyse, Hydrolyse, Solvolyse o.a. abgespalten werden kann, wobei
Y die Bedeutung von Si(R³)₃, 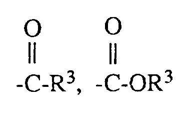 hat und
R³ = C₁-C₄-Alkyl, C₆-C₁₂-Cycloalkyl oder ein einwertiger aromatischer Kohlenwasserstoffrest mit 6-9 Kohlenstoffatomen ist.

2. Copolymerisate nach Anspruch 1, dadurch gekennzeichnet, daß sie als Bestandteil a) eines oder mehrere Comonomere aus der Gruppe Vinylidenfluorid, Tetrafluorethylen, Chlortrifluorethylen und Vinylfluorid enthalten und fluorhaltige C₃-C₈-Alkenen Comonomere des Bestandteils b1) sein können sowie fluorhaltige Alkyl-vinylether als Bestandteil b2).

3. Copolymerisate nach Anspruch 1, dadurch gekennzeichnet, daß eine Kombination zweier oder mehrere Monomeren aus der Gruppe Vinylidenfluorid/-Hexafluorpropen, Vinylidenfluorid/Tetrafluorethylen/Hexafluorpropen, Tetrafluorethylen/Vinylidenfluorid/Perfluoralkyl/Perfluorvinylether, Tetrafluorethylen/Propen, Tetrafluorethylen/Vinylidenfluorid/Hexafluorpropen/Pentafluorpropen, Tetrafluorethylen/Vinylidenfluorid/Hexafluorpropen/Perfluoralkyl/ Perfluorvinylether, Tetrafluorethylen/Hexafluorpropen/Hexafluorisobutylen und Vinylidenfluorid/Chlortrifluorethylen/Hexafluorpropen eingesetzt werden.

4. Copolymerisate nach Anspruch 1, dadurch gekennzeichnet, daß sie einen Anteil von 5 bis 45 Mol-%, bevorzugt 10 bis 40 Mol-%, bezogen auf die Molzahl aller Comonomere, Comonomere des Bestandteils b), bevorzugt der Bestandteile b1), b2) und/oder b4) enthalten.

5. Copolymerisate nach Anspruch 1, dadurch gekennzeichnet, daß sie einen Anteil an Comonomeren von 45 bis 55 Mol-% aus Gruppe a), 44,9 bis 54,9 Mol-% aus Gruppe b) und 0,1 bis 5 Mol-% aus Gruppe c), bevorzugt 47,9 bis 51,9 Mol-% aus Gruppe a), 47,9 bis 51,9 Mol-% aus Gruppe b) und 0,2 bis 2,5 Mol-% aus Gruppe c) enthalten.

6. Verfahren zur Herstellung von Copolymerisaten nach Anspruch 1, dadurch gekennzeichnet, daß die in Anspruch 1 genannten Comonomere radikalisch in Lösung, Suspension oder Emulsion bei -15°C bis +100°C bei erhöhtem Druck copolymerisiert werden.

7. Verfahren nach Anspruch 6, dadurch gekennzeichnet, daß die Copolymerisation in Emulsion durchgeführt wird.

8. Verfahren nach Anspruch 7, dadurch gekennzeichnet, daß der pH-Wert der Emulsion während der Polymerisation den Wert von 8 nicht übersteigt und bevorzugt im Bereich zwischen 4 und 7,5 liegt.

9. Verfahren nach Anspruch 6 bis 8, dadurch gekennzeichnet, daß als Initiatoren anorganische Perverbindungen eingesetzt werden, wobei eine Kombination dieser mit bekannten Zerfallsbeschleunigern bevorzugt wird.

10. Vernetzbare Zusammensetzungen aus Copolymerisaten gemäß Anspruch 1 und einem geeigneten Katalysatorsystem.

11. Vernetzbare Zusammensetzungen nach Anspruch 10, dadurch gekennzeichnet, daß das Katalysatorsystem aus
1. einem als "Cobeschleuniger" oder Säureakzeptor dienenden Metalloxid oder -hydroxid von zweiwertigen Metallen, wie Magnesium, Calcium, Blei, Zink und Barium oder einem basischen Salz mit einem organischen Säurerest, wie Natriumstearat, Magnesiumoxalat bzw. Kombinationen mehrerer von ihnen in Anteilen von 2 bis 25 Gew.-Teilen, bezogen auf 100 Gew.Teile Polymer
und
2. einer organischen Oniumverbindung (Ammonium-, Arsonium-, Stibonium-, Phosphonium-, Aminophosphonium-, Phosphoran-, Iminium- und Sulfoniumverbindungen), z.B. Benzyl-triphenyl-phosphoniumchlorid in Anteilen von 0,1 bis 3 Gew.-Teilen, bezogen auf 100 Teile Polymer,
besteht.

## Claims

1. Copolymers with capped phenol groups prepared from polymeric units of
a) 45 to 99.9 mol.%, relative to the number of moles of all comonomers, of one or more ethylenes with 1 to 4 fluorine atoms,
b) 0 to 54.9 mol.%, relative to the number of moles of all comonomers, of one or more comonomers from the group comprising
b1) linear or branched C₃-C₈ alkenes with at least one fluorine atom,
b2) alkyl vinyl ethers with at least one fluorine atom,
b3) open-chain or cyclic C₃-C₆ ketones with fluorinated α,α'-positions and
b4) non-fluorinated C₂-C₄ alkenes, C₃-C₆ alkyl vinyl ethers and C₄-C₆ vinyl esters and
c) 0.1 to 5 mol.%, relative to the number of moles of all comonomers, of one or more comonomers from the group comprising capped phenols with an olefinically unsaturated group of the formula (I): 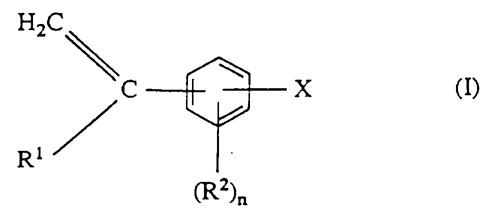 in which
R¹ = H, C₁-C₄ alkyl,
R = H, Cl, Br, C₁-C₄ alkyl, C₆-C₁₂ cycloalkyl, C₁-C₄ alkoxy with n = 0, 1, 2,
and
X = 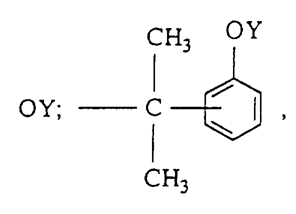
wherein
Y means a protective group which is stable under the polymerisation conditions for capping the phenol group and which may subsequently be eliminated by thermolysis, hydrolysis, solvolysis or the like, wherein
Y has the meaning Si(R³)₃, 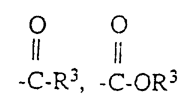 and
R³ = C₁-C₄ alkyl, C₆-C₁₂ cycloalkyl or a monovalent aromatic hydrocarbon residue with 6 to 9 carbon atoms.

2. Copolymers according to claim 1, characterised in that they contain one or more comonomers from the group comprising vinylidene fluoride, tetrafluoroethylene, chlorotrifluoroethylene and vinyl fluoride as constituent a) and C₃-C₈ alkenes containing fluorine may be constituent b1) comonomers, together with alkyl vinyl ethers containing fluorine as constituent b2).

3. Copolymers according to claim 1, characterised in that a combination of two or more monomers from the group comprising vinylidene fluoride/hexafluoropropene, vinylidene fluoride/tetrafluoroethylene/hexafluoropropene, tetrafluoroethylene/vinylidene fluoride/ perfluoroalkyl/perfluorovinyl ether, tetrafluoroethylene/propene, tetrafluoroethylene/vinylidene fluoride/hexafluoropropene/pentafluoropropene, tetrafluoroethylene/vinylidene fluoride/hexafluoropropene/perfluoroalkyl/perfluorovinyl ether, tetrafluoroethylene/hexafluoropropene/hexafluoroisobutylene and vinylidene fluoride/chlorotrifluoroethylene/hexafluoropropene is used.

4. Copolymers according to claim 1, characterised in that they contain a proportion from 5 to 45 mol.%, preferably from 10 to 40 mol.%, relative to the number of moles of all comonomers, of constituent b) comonomers, preferably of constituents b1), b2) and/or b4).

5. Copolymers according to claim 1, characterised in that they contain a proportion of comonomers from 45 to 55 mol.% from group a), 44.9 to 54.9 mol.% from group b) and 0.1 to 5 mot.% from group c), preferably from 47.9 to 51.9 mol.% from group a), 47.9 to 51.9 mol.% from group b) and 0.2 to 2.5 mot.% from group c).

6. Process for the production of copolymers according to claim 1, characterised in that the comonomers stated in claim 1 are copolymerised at elevated pressure by free radical polymerisation in solution, suspension or emulsion at -15°C to 100°C.

7. Process according to claim 6, characterised in that copolymerisation is performed in emulsion.

8. Process according to claim 7, characterised in that the pH of the emulsion during polymerisation does not exceed a value of 8 and is preferably within the range between 4 and 7.5.

9. Process according to claims 6 to 8, characterised in that inorganic per compounds are used as initiators, wherein a combination of these with known decomposition accelerators is preferred.

10. Crosslinkable compositions prepared from copolymers according to claim 1 and a suitable catalyst system.

11. Crosslinkable compositions according to claim 10, characterised in that the catalyst system consists of
1. a "co-accelerator" or acid acceptor consisting of a metal oxide or hydroxide of divalent metals such as magnesium, calcium, lead, zinc and barium or a basic salt with an organic acid residue, such as sodium stearate, magnesium oxalate or combinations of two or more thereof in proportions of 2 to 25 parts by weight, relative to 100 parts by weight of polymer
and
2. an organic onium compound (ammonium, arsonium, stibonium, phosphonium, aminophosphonium, phosphorane, iminium and sulphonium compounds), for example benzyltriphenylphosphonium chloride in proportions of 0.1 to 3 parts by weight, relative to 100 parts of polymer.

## Revendications

1. Copolymères présentant des groupes phénols bloqués, constitués par des unités polymères de
a) 45 à 99,9 moles %, rapportées aux quantités molaires de tous les comonomères, d'un ou de plusieurs composés éthyléniques contenant de 1 à 4 atomes de fluor,
b) 0 à 54,9 moles %, rapportées aux quantités molaires de tous les comonomères, d'un ou de plusieurs comonomères choisis parmi le groupe comprenant
b1) des alcènes en C₃-C₈ à chaînes droites ou ramifiées contenant au moins un atome de fluor,
b2) des alkyl-vinyléthers contenant au moins un atome de fluor,
b3) des cétones en C₃-C₆ à chaînes ouvertes ou cycliques, contenant des positions α,α' fluorées, et
b4) des alcènes en C₂-C₄ non fluorés, des alkyl(en C₃-C₆)vinyléthers et des esters vinyliques en C₄-C₆
et
c) 0,1-5 moles %, rapportées aux quantités molaires de tous les comonomères, d'un ou de plusieurs comonomères choisis parmi le groupe comprenant les phénols bloqués possédant un groupe à insaturation oléfinique selon la formule (I) : 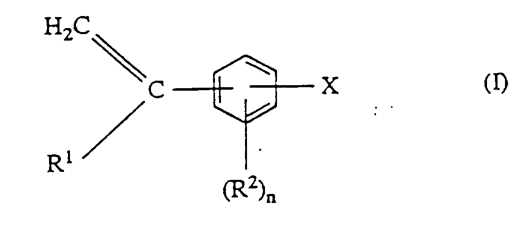 dans laquelle
R¹= H, un groupe alkyle en C₁-C₄,
R= H, Cl, Br, un groupe alkyle en C₁-C₄, un groupe cycloalkyle en C₆-C₁₂, un groupe alcoxy en C₁-C₄, n = 0, 1, 2,
et 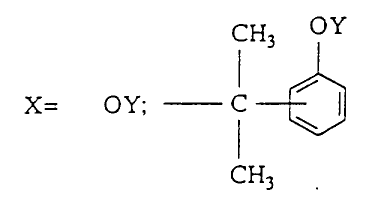 où
Y représente un groupe de protection stable dans les conditions de polymérisation pour le blocage du groupe phénol et qui peut être éliminé par la suite par thermolyse, par hydrolyse, par solvolyse ou analogues,
Y représentant Si (R³)₃, 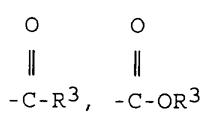 et
R³ représente un groupe alkyle en C₁-C₄, un groupe cycloalkyle en C₆-C₁₂ ou encore un radical d'hydrocarbure aromatique monovalent contenant de 6 à 9 atomes de carbone.

2. Copolymères selon la revendication 1, caractérisés en ce qu'ils contiennent comme composant a), un ou plusieurs comonomères choisis parmi le groupe comprenant le fluorure de vinylidène, le tétrafluoréthylène, le chlorotrifluoréthylène et le fluorure de vinyle, et des alcènes fluorés en C₃-C₈ pouvant être des comonomères du composant b1), ainsi que des alkylvinyléthers fluorés comme composant b2).

3. Copolymères selon la revendication 1, caractérisés en ce qu'on met en oeuvre une combinaison de deux monomères ou plus choisis parmi le groupe comprenant le fluorure de vinylidène/hexafluoropropène, le fluorure de vinylidène/-tétrafluoréthylène/hexafluoropropène, le tétrafluoréthylène/fluorure de vinylidène/perfluoralkyl/perfluorovinyléthers, le tétrafluoréthylène/propène, le tétrafluoréthylène/fluorure de vinylidène/hexafluoropropène/-pentafluoropropène, le tétrafluoréthylène/fluorure de vinylidène/hexafluoropropène/perfluoroalkyl/perfluorovinyléthers, le tétrafluoréthylène/hexafluoropropène/hexafluoroiso-butylène, et le fluorure de vinylidène/chlorotrifluoréthylène/hexafluoropropène.

4. Copolymères selon la revendication 1, caractérisés en ce qu'ils contiennent une fraction de 5 à 45 moles %, de préférence de 10 à 40 moles %, rapportées à la quantité molaire de tous les comonomères, de comonomères du composant b), de préférence des composants b1), b2) et/ou b4).

5. Copolymères selon la revendication 1, caractérisés en ce qu'ils contiennent une fraction de comonomères de 45 à 55 moles % du groupe a), de 44,9 à 54,9 moles % du groupe b) et de 0,1 à 5 moles % du groupe c), de préférence de 47,9 à 51,9 moles % du groupe a), de 47,9 à 51,9 moles % du groupe b) et de 0,2 à 2,5 moles % du groupe c).

6. Procédé pour la préparation de copolymères selon la revendication 1, caractérisé en ce qu'on copolymérise les comonomères mentionnés à la revendication 1, par voie radicalaire en solution, en suspension ou en émulsion à une température de -15°C à +100°C, sous pression élevée.

7. Procédé selon la revendication 6, caractérisé en ce qu'on effectue la copolymérisation en émulsion.

8. Procédé selon la revendication 7, caractérisé en ce que la valeur de pH de l'émulsion au cours de la polymérisation ne dépasse pas la valeur de 8 et se situe de préférence dans le domaine de 4 à 7,5.

9. Procédé selon les revendications 6 à 8, caractérisé en ce qu'on met en oeuvre, comme initiateurs, des percomposés inorganiques, une combinaison de ces derniers avec des accélérateurs de la décomposition connus étant préférée.

10. Compositions réticulables constituées par des copolymères selon la revendication 1 et par un système de catalyseurs approprié.

11. Compositions réticulables selon la revendication 10, caractérisées en ce que le système de catalyseurs est constitué par
1. un oxyde ou un hydroxyde métallique servant de "coaccélérateur" ou d'agent neutralisant les acides, de métaux bivalents tels que le magnésium, le calcium, le plomb, le zinc et le baryum, ou bien un sel basique contenant un radical d'acide organique, tel que le stéarate de sodium, l'oxalate de magnésium, respectivement des combinaisons de plusieurs d'entre eux dans des fractions de 2 à 25 parties en poids, rapportées à 100 parties en poids du polymère, et
2. un composé organique d'onium (des composés d'ammonium, d'arsonium, de stibonium, de phosphonium, d'aminophosphonium, de phosphorane, d'iminium ou de sulfonium), par exemple le chlorure de benzyltriphénylphosphonium dans des fractions de 0,1 à 3 parties en poids, rapportées à 100 parties du polymère.
